# EUROPÄISCHE PATENTANMELDUNG

(11) **EP 2 498 023 A1**
(43) Veröffentlichungstag der Anmeldung: **12.09.2012**
(21) Anmeldenummer: 12157123.6
(22) Anmeldetag: 27.02.2012
(51) Int. Cl.: F24J 2/52, H01L 31/042

(54) **Standardisiertes Befestigungssystem für Photovoltaikmodule und Montageverfahren**

(30) Priorität: 10.03.2011 DE 102011014391
(71) Anmelder: Creotecc GmbH, 79111 Freiburg (DE)
(72) Erfinder: Bartmann, Ulrich, 76661 Philippsburg (DE)
(74) Vertreter: Witte, Weller & Partner

(57) **Zusammenfassung**

Es wird vorgeschlagen ein Gelenkständer (18, 20) zur schrägen Montage eines PV-Moduls (16) auf einem Dach (12), vorzugsweise einem Flachdach (14), mit: einem sich im Wesentlichen in einer Längsrichtung (L) erstreckenden Halteprofil (26, 30) zur Befestigung des PV-Moduls (16), und einem sich im Wesentlichen in der Längsrichtung (L) erstreckenden Tragprofil (24, 28) zur Kopplung des Halteprofils (26, 30) an das Dach (12), wobei das Halteprofil (26, 30) und das Tragprofil (24, 28) entlang einer Verbindungsachse (104), die parallel zur Längsrichtung (L) orientiert ist, lösbar miteinander verbindbar sind, wobei der Gelenkständer (18, 20) ein männliches Verbindungselement (34) sowie ein weibliches Verbindungselement (32) mit einem Körper (36) aufweist, der zwei sich gegenüberliegende Schenkel (38, 40) umfasst, die einen sich parallel zur Längsrichtung (L) erstreckenden Verbindungsraum (50) umschließen und eine derartige Öffnung (42) zwischen sich definieren, dass das männliche Verbindungselement (34) in einer, vorzugsweise einzigen, Verbindungsstellung entlang einer senkrecht zur Längsrichtung (L) orientierten Querrichtung (92) in den Verbindungsraum (50) einführbar ist und anschließend um die Verbindungsachse (104) in eine Arretierstellung schwenkbar ist, in welcher die Verbindungselemente (32, 34) derart formschlüssig zusammengehalten werden, dass sie nicht mehr senkrecht zur Verbindungsachse (104) trennbar sind (Fig. 2).

## Beschreibung

Die vorliegende Erfindung betrifft einen Gelenkständer, der Teil eines Aufständerungssystems zur Befestigung eines Photovoltaikmoduls (nachfolgend auch als "PV-Modul" abgekürzt) eingesetzt wird. Die Erfindung betrifft ferner das Aufständerungssystem selbst sowie ein Verfahren zur Montage des Systems auf einem (Flach-)Dach.

Bei (Flach-)Dächern mit einer Neigung von mehr als 0° relativ zur Horizontalen ist eine dachparallele Montage von PV-Modulen wegen geringer (Solar)Erträge und ungenügender Selbstreinigung nicht zu empfehlen. Herkömmliche Dachaufständerungen, die eine für Europa ertragsoptimierte Neigung von beispielsweise 30° bieten, sind aufgrund ihrer Komplexität in vielen Fällen nicht zum Einsatz geeignet.

Das deutsche Gebrauchsmuster DE 20 2009 002 208 U1 offenbart ein Dachaufständerungssystem, um PV-Module mit einem gewünschten Winkel relativ zum Flachdach anzubringen. Die PV-Module werden nicht an den Ecken, sondern aus statischen Gründen an nach innen versetzten Auflagestellen geringer Durchbiegung getragen. Diese Auflagestellen liegen rund 1/4 bis 1/5 der Länge der Längsseite des PV-Moduls nach innen versetzt. Dies begrenzt wiederum einen Winkel, der zwischen dem PV-Modul und dem Dach möglich ist. Dieses Problem soll dadurch gelöst werden, dass zwei unterschiedlich hohe Tragprofile (Ständer) eingesetzt werden. Ein vorderes Tragprofil hat eine geringere Stützhöhe als ein hinteres Tragprofil. Die Tragprofile sind in ihren jeweils oberen Bereichen, d.h. dort, wo das PV-Modul aufliegt, gegenüber dem Untergrund starr geneigt. Es werden Neigungswinkel zwischen 3° und 13° angeboten.

Ein weiteres Aufständerungssystem, das in den Räumen der Anmelderin besichtigt werden kann, besteht aus zwei unterschiedlich hohen, pfostenähnlichen Ständern und einem durchgehenden, senkrecht dazu orientierten Basisprofil. Die Ständer und das Basisprofil weisen jeweils ein männliches oder weibliches Verbindungselement auf, die axial ineinander geschoben werden und die im eingeschobenen Zustand derart gegeneinander verdreht werden können, dass Neigungswinkel von 5 bis 20° einstellbar sind. Problematisch bei diesem Aufständerungssystem ist das axiale Einschieben des Basisprofils in die Aufständerung. Je größer die Länge in der axialen Richtung ist, entlang der die Aufständerung mit dem Basisprofil in Eingriff ist, desto höher wird die Reibung. Mit zunehmender Reibung wird das axiale Einschieben schwieriger. Da Basisprofile mit Längen von mehr als 4 m keine Ausnahme darstellen, und da es vorkommen kann, dass die Basisprofile von einem Dachrand in Richtung des Dachs selbst eingeschoben werden müssen, birgt diese Montageart ein hohes Gefahrenpotential. Für einen Monteur besteht die Gefahr, dass er abstürzt, weil er das Basisprofil weit über das Dach auskragend handhaben muss. Zwar kann diese Gefahr reduziert werden, wenn beispielsweise ein Kran und/oder ein Gerüst zur unterstützenden Sicherung des auskragenden Basisprofils eingesetzt wird. Jedoch erhöht ein zusätzlicher Kran bzw. ein Gerüst den Aufwand und somit die Kosten.

Es ist daher eine Aufgabe der vorliegenden Erfindung, einen Gelenksständer, ein Dachaufständerungssystem sowie ein Montageverfahren bereitzustellen, die die oben erwähnten Nachteile überwinden.

Diese Aufgabe wird mit einem Gelenkständer zur schrägen Montage eines PV-Moduls auf einem Dach, vorzugsweise einem Flachdach, gelöst. Der Gelenkständer weist auf: ein sich im Wesentlichen in einer Längsrichtung erstreckendes Halteprofil zur Befestigung des PV-Moduls und ein sich im Wesentlichen in der Längsrichtung erstreckendes Tragprofil zur Kopplung des Halteprofils an das Dach, wobei das Halteprofil und das Tragprofil entlang einer Verbindungsachse, die parallel zur Längsrichtung orientiert ist, lösbar mit einander verbindbar sind, wobei der Gelenkständer ein männliches Verbindungselement sowie ein weibliches Verbindungselement aufweist, wobei das weibliche Verbindungselement zwei sich gegenüberliegende Schenkel aufweist, die einen sich um die Verbindungsachse erstreckenden Verbindungsraum umschließen und die eine derartige Öffnung zwischen sich definieren, dass das männliche Verbindungselement in einer Verbindungsstellung entlang einer senkrecht zur Längsrichtung orientierten Querrichtung in den Verbindungsraum einführbar ist und anschließend um die Verbindungsachse in eine Arretierstellung drehbar ist, in welcher die Verbindungselemente derart formschlüssig zusammengehalten sind, dass sie nicht in der Querrichtung trennbar sind.

Gemäß einer bevorzugten Ausführungsform ist das weibliche Verbindungselement an einem der Profile vorgesehen und das männliche Verbindungselement ist am anderen Profil vorgesehen.

Der Gelenkständer der Erfindung ist also zumindest zweiteilig ausgebildet, wobei es keine Rolle spielt, ob das weibliche Verbindungselement am Halteprofil oder am Tragprofil vorgesehen ist. Beide Varianten sind möglich.

Ferner ist es von Vorteil, wenn der Verbindungsraum ein zylindrischer Hohlraum im Körper des weiblichen Verbindungselements ist, wobei sich der Hohlraum entlang einer Zylinderachse erstreckt, die in der Arretierstellung koaxial zur Verbindungsachse orientiert ist.

Durch die zylindrische Ausbildung des Hohlraums im Körper des weiblichen Verbindungselements ist das weibliche Verbindungselement beim Einstellen des Neigungswinkels jederzeit flächig geführt. Jeder beliebige Winkel kann ohne Probleme eingestellt werden.

Außerdem hat es sich als vorteilhaft erwiesen, wenn das männliche Verbindungselement einen im Querschnitt kreisbogenförmigen ersten Abschnitt und einen kreisbogenförmigen zweiten Abschnitt aufweist, die sich vorzugsweise nahezu diametral gegenüberliegen, wobei die kreisbogenförmigen Abschnitte im Querschnitt mit einer Innenwand des Hohlraums auf einem imaginären Kreis liegen.

Es ist nicht erforderlich, dass eine Kontur des männlichen Verbindungselements vollständig zylindersymmetrisch ist. Einige wenige kreisbogenförmige Abschnitte reichen vollkommen aus, um die oben erwähnte Führung sicher zu ermöglichen.

Bei einer weiteren besonderen Ausgestaltung schließen die Schenkel einen Winkel ein, der größer als 180° ist.

Wenn der von den Schenkeln eingeschlossene Winkel größer als 180° ist, lässt sich die Verliersicherheit einfacher realisieren. Das für das männliche Verbindungselement benötigte Material kann reduziert werden. Es sind nur kleine kreisbogenförmige Abschnitte zur kreisbogenförmigen Führung erforderlich.

Außerdem ist es von Vorteil, wenn die Öffnung als ein in der Längsrichtung verlaufender Schlitz, vorzugsweise mit konstanter Breite, im Körper ausgebildet ist.

Der gleichförmige Schlitz ist mit verantwortlich dafür, dass die Profile in einer Vorzugsrichtung ineinander gesteckt werden, die radial zur gemeinsamen Verbindungsachse der Verbindungselemente im verbundenen Zustand orientiert ist. Im Idealfall steckt der Monteur das lose, noch nicht am Dach befestigte Halteprofil in nahezu senkrechter Richtung zum Dach auf das bereits am Dach befestigte Tragprofil. Dazu werden keine zusätzlichen Gerätschaften benötigt. Auch die Sicherheitsvorschriften werden ausreichend berücksichtigt.

Insbesondere kann ein linearer Abschnitt des männlichen Verbindungselements im Querschnitt parallel zur Querrichtung in der Verbindungsstellung orientiert sein, entlang der die Verbindungselemente mittels einer linearen Bewegung verbunden werden.

Der lineare Abschnitt dient somit als Führung beim Zusammenführen der Verbindungselemente.

Bei einer weiteren bevorzugten Ausführungsform ist das Halteprofil so gebildet, dass es bei einer Drehung um 180° um die Querrichtung ebenfalls mit dem Tragprofil verbindbar ist.

Auf diese Weise erschließt sich dem modular aufgebauten Aufständerungssystem der Erfindung eine weitere Relativlage, in der das PV-Modul mit einem (anderen) Neigungswinkel (aber bei gleichem einstellbaren Winkelbereich) auf dem Dach variabel befestigt werden kann. Die Form des Halteprofils muss dazu nicht geändert werden und kann somit beibehalten werden. Dies ist ein Vorteil, der sich in einer geringen Anzahl von Baukastenelementen bei einer hohen Kombinationsvielfalt ausdrückt.

Ferner können die Profile in der Längsrichtung flächig ausgebildet sein.

Durch die flächige Ausbildung der Gelenkständer bildet sich unter dem PV-Modul ein Kanal in der Längsrichtung, der seitlich im Wesentlichen abgeschlossen ist. Das Volumen, welches von dem PV-Modul und dem Dach eingeschlossen wird und in welches Wind seitlich (d.h. senkrecht zu den Gelenkständern) eingreifen kann, wird verringert, d.h. die Windangriffsfläche wird deutlich verringert. Die Wahrscheinlichkeit, dass die PV-Module vom Dach abgehoben werden, reduziert sich praktisch auf Null.

Die obige Aufgabe wird ferner durch ein Verfahren zur schrägen Montage eines PV-Moduls auf einem Dach unter Verwendung von mindestens zwei Gelenkständern gemäß der Erfindung gelöst, wobei die Gelenkständer unterschiedliche Höhen aufweisen und das Verfahren die folgenden Schritte umfasst: Befestigen eines ersten Tragprofils am Dach; Befestigen eines zweiten Tragprofils am Dach in einem auswählbaren Abstand relativ zum ersten Tragprofil; Ausrichten der Halteprofile relativ zu den Tragprofilen, so dass sich die Profile in der Verbindungsstellung befinden; lineares Bewegen der Halteprofile relativ zu den Tragprofilen entlang der Querrichtung in der Verbindungsstellung; Drehen der Halteprofile um ihre jeweilige Längsachse in eine beliebige Arretierstellung; Auflegen des PV-Moduls auf die Halteprofile; und Fixieren des PV-Moduls an den Halteprofilen.

Ein Monteur braucht zum Einstellen des gewünschten Neigungswinkels für die PV-Module lediglich einen Zollstock, ein Maßband oder Ähnliches, um den Relativabstand zwischen den Tragprofilen auszumessen. Beim Montieren der Tragprofile selbst kann der Monteur die Trag- und Halteprofile auf einfache Weise radial ineinander stecken. Ein axiales Einschieben der Profile ineinander ist nicht erforderlich. Auch werden keine zusätzlichen Hilfsgeräte, wie z.B. ein Kran oder dgl., zum Einschieben der Profile benötigt.

Ein weiterer Vorteil ist darin zu sehen, dass der Monteur die Winkel zwischen den Halteprofilen und den Tragprofilen nicht vorab einstellen muss, bevor er das PV-Modul auf die Gelenkständer legt. Durch das Auflegen der PV-Module können sich die Tragprofile von alleine ausrichten, so dass sie während der Montage beliebig orientiert werden können.

All diese Maßnahmen erhöhen die Geschwindigkeit, mit der ein Monteur ein PV-Modul auf einem Dach unter einem gewünschten Winkel montieren kann. Die Montage ist fehlersicher, da der Winkel nie direkt, sondern lediglich über einen Abstand (sicher) eingestellt wird.

Bei einer besonderen Ausgestaltung des Verfahrens wird ein Neigungswinkel, der von dem PV-Modul und dem Dach eingeschlossen wird, allein durch die Auswahl des Abstands zwischen den Gelenkständern festgelegt, wobei die Gelenkständer konstante, unterschiedliche Höhen aufweisen.

Selbst bei einem System, das nur zwei Gelenkständer mit unterschiedlicher Höhe aufweist, lassen sich alle beliebigen Winkel einstellen, die allein durch die Länge des kreisförmigen Abschnitts des männlichen Verbindungselements bedingt ist, den wiederum den einstellbaren Winkelbereich definiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Ausführungsbeispiele der Erfindung sind in der Zeichnung dargestellt und werden in der nachfolgenden Beschreibung näher erläutert. Es zeigen:
- Fig. 1: eine Seitenansicht eines (Dach-)Aufständerungssystems der Erfindung;
- Fig. 2a und 2b: Schnittansichten eines weiblichen Verbindungselements (Fig. 2a) und eines männlichen Verbindungselements (Fig. 2b);
- Fig. 3a und 3b: Sequenzen eines Zusammenführens der weiblichen und männlichen Verbindungselemente der Fig. 2;
- Fig. 4a bis c: verschiedene Winkelstellungen der miteinander verbundenen Verbindungselemente der Fig. 2 und 3;
- Fig. 5a und 5b: Schnittansichten eines Halteprofils und eines Tragprofils, die miteinander verbunden sind, wobei das Halteprofil in Fig. 5b umgedreht wurde; und
- Fig. 6: ein Flussdiagramm eines Verfahrens zum Montieren des Aufständerungssystems der Erfindung auf einem Dach.

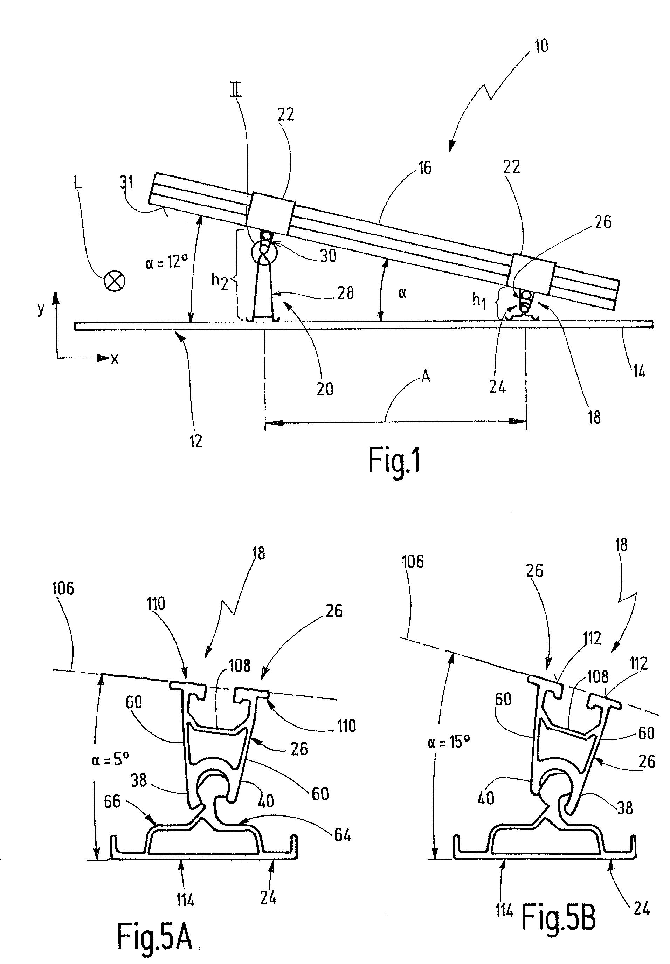

Fig. 1 zeigt ein Aufständerungssystem 10 gemäß der vorliegenden Erfindung in einer Seitenansicht. Das System 10 ist zur Montage auf einem Dach 12, insbesondere einem Flachdach 14 geeignet, um ein PV-Modul 16, das mit oder ohne Rahmen ausgebildet sein kann, mit einem Winkel α relativ zum Dach 12 auf dem Dach 12 zu befestigen. Das System 10 weist einen vorderen Gelenkständer 18 und einen hinteren Gelenkständer 20 auf. Der vordere Gelenkständer 18 weist eine niedrigere (Gesamt-)Höhe h1 als der hintere Gelenkständer 20 auf, dessen (Gesamt-)Höhe mit h2 bezeichnet ist. Das PV-Modul 16 wird z.B. über Halteklemmen 22 an den Gelenkständern 18 und 20 fixiert.

Der vordere Gelenkständer 18 weist ein vorderes Tragprofil 24 und ein vorderes Halteprofil 26 auf. Der hintere Gelenkständer 20 weist ein hinteres Tragprofil 28 und ein hinteres Halteprofil 30 auf. Die hinteren und vorderen Halteprofile 26 und 30 sind vorzugsweise identisch ausgebildet. Die Tragprofile 24 und 28 sind vorzugsweise, mit Ausnahme ihrer Höhe, ebenfalls identisch ausgebildet. Die Höhe h wird senkrecht zum Dach 12 bestimmt.

Da das Aufständerungssystem 10 der Erfindung baukastenartig aufgebaut ist und aus möglichst wenigen Komponenten bestehen soll, werden vorzugsweise identische Halteprofile 26 bzw. 30 und lediglich zwei unterschiedlich hohe Tragprofile 24 und 28 eingesetzt. Über die fest definierten Höhen h1 und h2 der Tragprofile 24 und 28 lässt sich der Neigungswinkel α des PV-Moduls 16 relativ zum Dach 12 geometrisch allein aus einem Abstand A zwischen dem vorderen Gelenkständer 18 und dem hinteren Gelenkständer 20 bestimmen. Es versteht sich, dass die nachfolgenden Ausführungen sowie die Figuren vereinfacht dargestellt sind, soweit eine genaue Positionierung der Höhen h1 bzw. h2 oder des Abstands A relativ zu den jeweiligen Gelenkständern 18 und 20 betroffen ist.

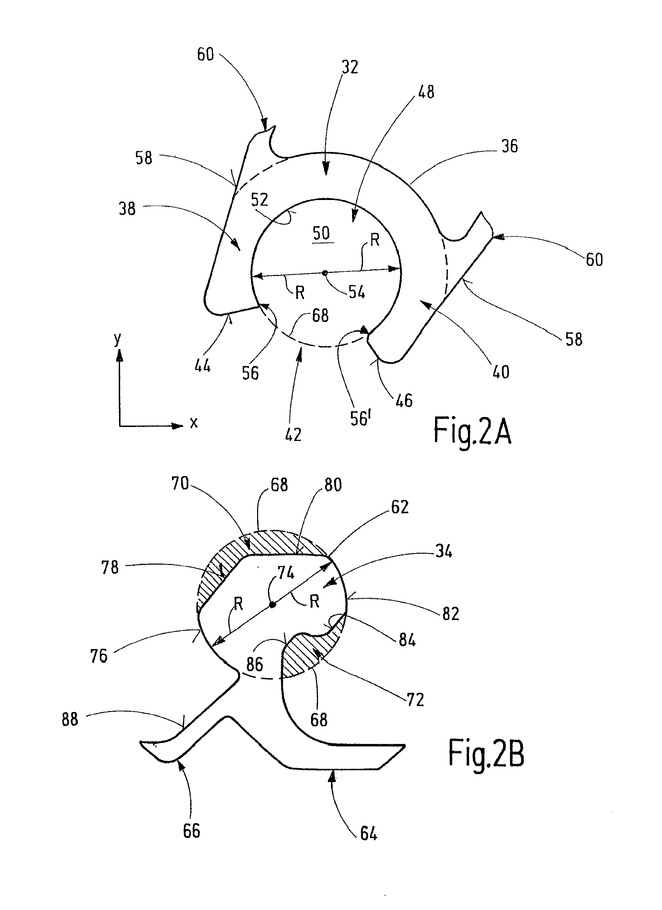

Die Profile 24 bis 30 erstrecken sich, vorzugsweise jeweils durchgehend, im Wesentlichen in einer Längsrichtung L, die im Beispiel der Fig. 1 senkrecht zur Zeichenebene orientiert ist (d.h. parallel zur Z-Richtung). Die Profile 24 bis 30 sind in Fig. 1 in Eingriff miteinander gezeigt, d.h. miteinander verbunden. Die Verbindung erfolgt über ein weibliches Verbindungselement 32 und ein männliches Verbindungselement 34, die unter Bezugnahme auf die Fig. 2a und 2b noch näher beschrieben werden. Die Profile 24 bis 30 können mittels Strangpressverfahren hergestellt werden und auf beliebige Längen abgelängt werden.

Über den Abstand A der Tragprofile 24 und 28 wird der Neigungswinkel α bestimmt. Die drehbar mit den Tragprofilen 24 und 28 verbundenen Halteprofile 26 und 30 müssen bei einer Montage des Systems 10 auf dem Dach 12 lediglich (radial) ineinander gesteckt werden und können anschließend gegeneinander verdreht werden, so dass eine Winkeljustierung zwischen den Tragprofilen 24 bzw. 28 und den Halteprofilen 26 bzw. 30 nicht erforderlich ist. Zur Einstellung des Neigungswinkels α reicht es also vollkommen aus, wenn ein Monteur einen Zollstock oder Ähnliches mit sich führt, um den Abstand A auf dem Dach 12 per Hand auszumessen. Über den Abstand A kann der Monteur den Neigungswinkel α aus mitgelieferten Tabellen ablesen. Dies erleichtert die Montage im Hinblick auf eine Montagedauer sowie auf die rechnerischen Fähigkeiten, die an den Monteur gestellt werden.

Bezugnehmend auf die Fig. 2a und 2b werden nachfolgend das weibliche Verbindungselement 32 (Fig. 2a) und das männliche Verbindungselement 34 (Fig. 2b) genauer erläutert werden. Das weibliche Verbindungselement 32 sowie das männliche Verbindungselement 34 sind Teil der Halteprofile 26, 30 bzw. der vorderen und hinteren Tragprofile 24 und 28. In den Figuren der Anmeldung weisen die Halteprofile 26 und 30 das weibliche Verbindungselement 32 auf und die Tragprofile 24 und 28 jeweils das männliche Verbindungselement 34 auf. Es versteht sich, dass auch die Tragprofile 24 und 28 mit jeweils dem weiblichen Verbindungselement 32 ausgestattet sein können, wobei in diesem Fall die Halteprofile 26 und 30 jeweils mit dem männlichen Verbindungselement 34 ausgestattet sind.

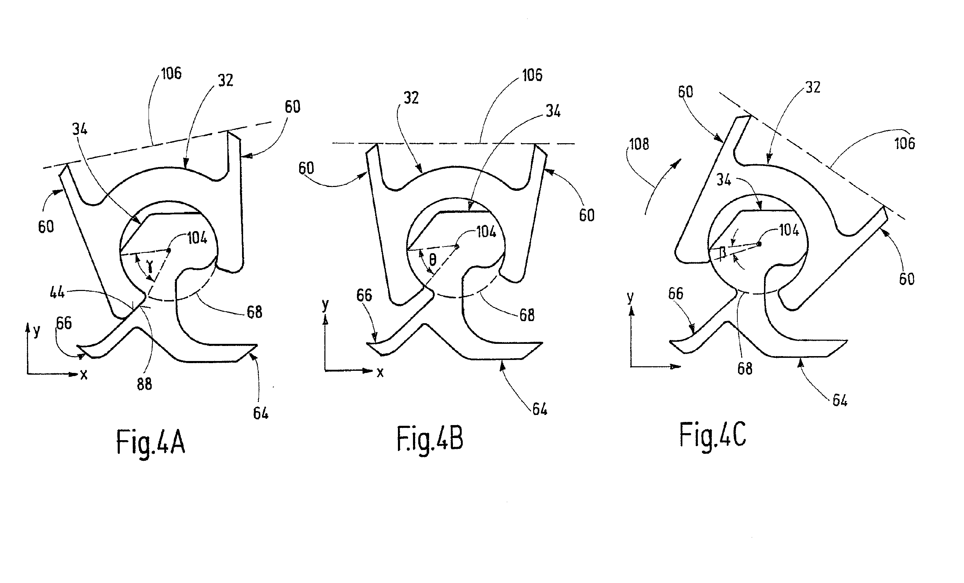

In Fig. 2a ist ein Körper des weiblichen Verbindungselements 32 mit 36 bezeichnet. Der Körper 36 weist einen ersten Schenkel 38 und einen zweiten Schenkel 40 auf, die sich in der Querschnittsdarstellung der Fig. 2a und 2b (Schnitt senkrecht zur Längsrichtung L) gegenüberliegen. Der erste Schenkel 38 und der zweite Schenkel 40 definieren eine Öffnung 42 zwischen sich. Der erste Schenkel 38 weist eine Stirnseite 44 auf. Der zweite Schenkel 40 weist eine Stirnseite 46 auf, die als winkelbegrenzende Anschlagselemente dienen, wie es nachfolgend noch näher erläutert werden wird. Im Inneren des Körpers 36 ist ein zylinderförmiger Hohlraum 48 definiert, der einen kreisförmigen Querschnitt aufweist und als Verbindungsraum 50 dient. Der Hohlraum 48 weist eine zylindermantelförmige Innenwand 52 und eine Mittelachse 54 auf, die als Verbindungsachse 104 (Fig. 4) dient, wie es nachfolgend noch genauer beschrieben werden wird. Die Innenwand 52 wird allein durch die Öffnung 42 unterbrochen, die schlitzförmig in der Längsrichtung L verläuft und durch die Öffnungskanten 56 und 56' begrenzt ist. Die Öffnungskanten 56 und 56' definieren einen Winkel innerhalb des Verbindungsraums 50 zwischen sich, der größer als 180° ist.

Die Außenflächen 58 des ersten Schenkels 38 und des zweiten Schenkels 40 erstrecken sich vorzugsweise in Richtung des PV-Moduls 16 und gehen in Stützschenkel 60 des Halteprofils 26 bzw. 30 über, die in der Fig. 2a lediglich teilweise dargestellt sind. Der Körper 36 weist vorzugsweise einen nahezu ringförmigen Querschnitt auf, aus dem die Stützschenkel 60 hervorstehen.

In Fig. 2b ist ein Querschnitt (Schnitt senkrecht zur Längsrichtung L) des männlichen Verbindungselements 34 gezeigt. Das männliche Verbindungselement weist einen Körper 62 auf, der an zwei Stützschenkel 64 und 66 des (nicht dargestellten) Tragprofils 24 bzw. 28 anschließt und der im Querschnitt die Grundform eines Kreises 68 aufweist, der wiederum um ausgewählte Kreisbereiche (vgl. schraffiert dargestellte Bereiche 70 und 72) reduziert ist. Die Schenkel 64 und 66 sind nur teilweise dargestellt und erstrecken sich in der Realität weiter nach unten, wie es exemplarisch in den Fig. 5a und 5b gezeigt ist, wo auch die Stützschenkel 60 exemplarisch in vollständiger Ausgestaltung gezeigt sind. Es versteht sich, dass der (imaginäre) Kreis 68 lediglich zu einem besseren Verständnis gezeigt ist. Der Kreis 68 deckt sich mit dem Verlauf der Innenwand 52 des Körpers 36 des weiblichen Verbindungselements 32 der Fig. 2a im verbundenen Zustand der Verbindungselemente 32 und 34. Der Kreis 68 hat einen Mittelpunkt (bzw. eine Mittelachse) 74.

Der Verlauf der Konturen des Körpers 62 des männlichen Verbindungselements 34 im Querschnitt wird nachfolgend beschrieben. An einen ersten kreisförmigen Abschnitt 76, der dort beginnt, wo der zweite Schenkel 66 eine Kante mit dem Körper 62 bildet, kann sich ein erster linearer Abschnitt 78, ein zweiter linearer Abschnitt 80 und ein zweiter kreisförmiger Abschnitt 82 anschließen. An den zweiten kreisförmigen Abschnitt 82 kann sich ein dritter linearer Abschnitt 84 sowie ein S-förmiger Abschnitt 86 anschließen, der wiederum in den ersten Schenkel 64 übergehen kann. Die Anzahl der linearen und kreisförmigen Abschnitte kann variiert werden.

Der erste kreisförmige Abschnitt 76 und der zweite kreisförmige Abschnitt 82 liegen sich vorzugsweise im Wesentlichen diametral gegenüber. Die Krümmungsradien entsprechen einem Radius R des Kreises 68.

Der erste lineare Abschnitt 78 liegt innerhalb des Kreises 68 und bildet mit dem zweiten linearen Abschnitt 80 einen Winkel, der vorzugsweise 180° entspricht oder kleiner ist. Der erste lineare Abschnitt 78 dient der Führung des weiblichen Verbindungselements 32 während eines Verbindungsvorgangs der Verbindungselemente 32 und 34, wie es nachfolgend noch genauer beschreiben werden wird. Die kreisförmigen Abschnitte 76 und 82 dienen der Führung während eines Verdrehens des weiblichen Verbindungselements 32 gegenüber dem männlichen Verbindungselement 34.

Der (optionale) dritte lineare Abschnitt 84 erstreckt sich wiederum in den Kreis 68 hinein und ist vorzugsweise parallel zum ersten linearen Abschnitt 78 orientiert. Der S-förmige Abschnitt 86 reduziert die Fläche des Kreises 68 zusätzlich und vereinfacht das Zusammenstecken des weiblichen Verbindungselements 32 und des männlichen Verbindungselements 34, ohne dass sich die Teile 32 und 34 unbeabsichtigt voneinander lösen.

Eine im Wesentlichen linear ausgerichtete Außenseite 88 des zweiten Schenkels 66 dient im verbundenen Zustand der Verbindungselemente 32 und 34 als Anschlagsfläche für die Stirnseite 44 des ersten Schenkels 38 des weiblichen Verbindungselements 32.

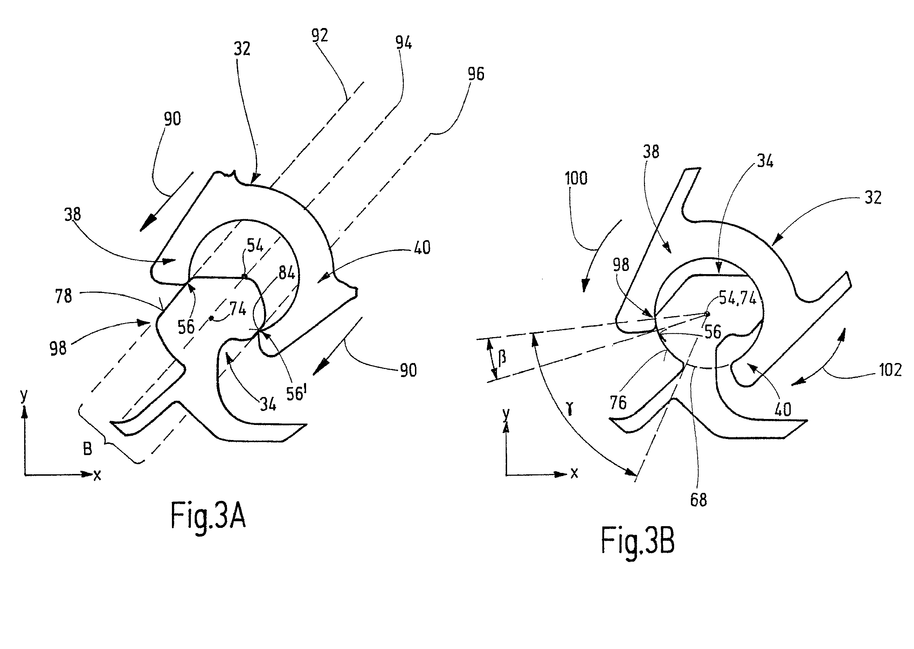

In den Fig. 3a und 3b sind eine Verbindungsstellung (Fig. 3a) und eine Arretierstellung (Fig. 3b) für das weibliche Verbindungselement 32 und das männliche Verbindungselement 34 gezeigt.

In Fig. 3a sind die Verbindungselemente 32 und 34 so zueinander orientiert, dass die Schenkel 38 und 40 mit ihrer dazwischen liegenden Öffnung 42 über den Körper 62 des männlichen Verbindungselements 34 mittels einer linearen Bewegung (vgl. Pfeile 90) geschoben werden kann. Die lineare Bewegung 90, mittels der die Verbindungselemente 32 und 34 miteinander in Eingriff gebracht werden, wird durch den ersten linearen Abschnitt 78 des männlichen Verbindungselements 34 geführt. In Fig. 3a ist eine Hilfslinie 92 (Gerade) gezeigt, die einer gedachten Fortsetzung des linearen Abschnitts 78 entspricht. Ferner sind zwei weitere parallele Hilfslinien 94 und 96 gezeigt. Die Hilfslinie 94 stellt eine imaginäre Verbindungslinie der Mittelpunkte bzw. -achsen 54 und 74 des weiblichen Verbindungselements 32 und des männlichen Verbindungselements 34 dar. Die dritte Hilfslinie 96 stellt die gedachte Verlängerung des dritten linearen Abschnitts 84 dar. Die Hilfslinien 92, 94 und 96 sowie die Pfeile 90 sind parallel zueinander angeordnet. Die lichte Breite der Öffnung 42 entspricht hier dem Abstand der Hilfslinien 92 und 96 in der Fig. 3a.

Die linearen Abschnitte 78 und 84 des männlichen Verbindungselements 34 unterstützen den (nicht dargestellten) Monteur beim Zusammenstecken der Verbindungselemente 32 und 34 mittels der linearen Bewegung 90, die in Bezug auf die Mittelpunkte 54 und 74 in einer radialen Richtung erfolgt. Ein axiales Zusammenschieben der Verbindungsteile 32 und 34, wie es im Stand der Technik gefordert wird, ist nicht mehr erforderlich.

Das Zusammenstecken der Verbindungselemente 32 und 34 erfolgt üblicherweise in mehreren Phasen. Während einer ersten Phase des Zusammensteckens hilft die parallele Ausrichtung der linearen Abschnitte 78 und 84 dem Monteur die Verbindungsstellung zu finden. Die Verbindungsstellung zeichnet sich dadurch aus, dass die Verbindungselemente 32 und 34 in einer radialen Richtung in Eingriff gebracht werden können. Im Beispiel der Fig. 3a gibt es z.B. nur eine einzige Verbindungsstellung. Wenn jedoch eine Breite des männlichen Verbindungselements 34 noch geringer als die in der Fig. 3a gezeigte Breite B gewählt ist, gibt es mehrere mögliche Verbindungsstellungen, wobei die lineare Bewegung 90 immer parallel zur Ausrichtung des ersten linearen Abschnitts 78, d.h. parallel zur Hilfslinie 92, erfolgt. Die Breite B ist senkrecht zum ersten linearen Abschnitt 78 orientiert. In der ersten Phase wird das weibliche Verbindungselement 32 so vorab um die Mittelachse 54 gedreht, dass das weibliche Verbindungselement 32 entlang des ersten linearen Abschnitts 78 mittels der linearen Bewegung 90 auf das männliche Verbindungselement 34 aufgesteckt werden kann. Dabei kommt die Öffnungskante 56 des ersten Schenkels 38 in Berührung mit dem ersten linearen Abschnitt 78.

In einer zweiten Phase kommt die Seitenkante 56 des zweiten Schenkels 40 mit dem dritten linearen Abschnitt 84 in Anlage.

In einer dritten Phase bleibt die Seitenkante 56 des ersten Schenkels 38 in Kontakt mit dem ersten linearen Abschnitt 78 und die Seitenkante 56' des zweiten Schenkels 40 kommt außer Eingriff mit dem dritten linearen Abschnitt 84. In diesem Zustand sind die Verbindungselemente 32 und 34 mit einem leichten Spiel in radialer Richtung verliersicher miteinander verbunden. Der Monteur kann das weibliche Verbindungselement 32 theoretisch loslassen, ohne dass es sich von dem männlichen Verbindungselement 34 trennt. Die dritte Phase endet, wenn die Seitenkante 56 des ersten Schenkels 38 eine Kante 98 erreicht, wo der erste kreisförmige Abschnitt 76 in den ersten linearen Abschnitt 78 am männlichen Verbindungselement 34 übergeht. Sobald dieser Punkt erreicht ist, befinden sich die Verbindungselemente 32 und 34 in ihrer Arretierstellung, die unter Bezugnahme auf Fig. 3b noch näher erläutert werden wird und in der der Neigungswinkel α (vgl. Fig. 1) durch Drehen des weiblichen Verbindungselements 32 um die dann koaxial liegenden Mittelachsen 54 und 74 erfolgt.

Fig. 3b zeigt eine von vielen möglichen Arretierstellungen. In der Fig. 3b wurde das weibliche Verbindungselement 32 um einen Winkel β gegen den Uhrzeigersinn um die Verbindungsachse 104 (Fig. 4) gedreht, die durch die koaxial liegenden Mittelachsen 54 und 74 definiert ist. Die Öffnungskante 56 des ersten Schenkels 38 hat dabei einen Kreisbogen durchschritten, der der Entfernung der Kanten 56 und 98 auf dem Grundkreis 68 entspricht.

Die Drehbewegung ist in Fig. 3b durch einen Pfeil 100 angedeutet. Es versteht sich, dass das weibliche Verbindungselement 32 sowohl im Uhrzeigersinn als auch gegen den Uhrzeigersinn gedreht werden kann, wie es durch einen Pfeil 102 angedeutet ist. Ein maximal einstellbarer Winkel ist in Fig. 3b mit γ bezeichnet und wird dann erreicht, wenn die Öffnungskante 56 des ersten Schenkels 38 den ersten kreisförmigen Abschnitt 76 überstrichen hat. Dies wird im Zusammenhang mit der Beschreibung der Fig. 4c noch genauer erläutert werden.

Bezugnehmend auf Fig. 4a bis 4c werden verschiedene Arretierstellungen (ensprechend z.B. 11° bis 30° effektiver Neigung des PV-Moduls 16 zum Dach 12) gezeigt. Die koaxialen Mittelachsen 54 und 74 werden nachfolgend als (gemeinsame) Verbindungsachse 104 bezeichnet. Zur Veranschaulichung der verschiedenen Neigungswinkel α, die das (nicht dargestellte) PV-Modul 16 im montierten Zustand einnimmt, ist eine Montageebene 106 durch eine Strichlinie angedeutet, die auf den Stützschenkeln 60, die in den Fig. 4a bis 4c wiederum nur angedeutet sind, aufsitzt und durch die relative Lage ihre Enden definiert ist.

In der Fig. 4a ist eine maximale Winkelstellung (vgl. Winkel γ in Fig. 3b) gezeigt, bei der die Stirnseite 44 an die Außenseite 88 des zweiten Schenkels 66 des Tragprofils 24 oder 28 anstößt. Die Schenkel 64 und 66 des Tragprofils 24 bzw. 28 sind hier wieder nur teilweise dargestellt.

In Fig. 4b ist eine Zwischenstellung mit einem Winkel θ gezeigt. In der Winkelstellung 0 ist die exemplarisch dargestellte Montageebene 106 nahezu parallel zur Horizontalen orientiert.

In der Fig. 4c ist die gleiche Arretierstellung wie in Fig. 3b gezeigt. Die (Arretier-)Stellung der Fig. 4c erreicht man, wenn man die Verbindungselemente 32 und 34 ausgehend von der in der Fig. 4a gezeigten Stellung im Uhrzeigersinn in Richtung der Verbindungsstellung (98 und 56 sind dann deckungsgleich) zurückdreht, wie es in Fig. 4c durch einen Pfeil 108 angedeutet ist.

Wie man in den Fig. 4a bis 4c gut erkennt, kommen das weibliche Verbindungselement 32 und das männliche Verbindungselement 34 im Wesentlichen in zwei Bereichen in Eingriff, nämlich beim ersten kreisförmigen Abschnitt 76 und beim zweiten kreisförmigen Abschnitt 82. Die kreisförmigen Abschnitte 76 und 82 liegen sich im Wesentlichen diametral gegenüber und gewährleisten eine gute Fixierung und Führung des weiblichen Verbindungselements 32 am männlichen Verbindungselement 34. In den Verbindungsstellungen, wie sie in den Fig. 3b und 4a bis 4c gezeigt sind, kann das weibliche Verbindungselement 32 nicht in radialer Richtung (relativ zur Verbindungsachse 104), insbesondere nicht entgegen der Richtung der linearen Bewegung 90 (vgl. Fig. 3a), die beim Zusammenstecken der Verbindungselemente 32 und 34 durchlaufen wird, bewegt werden.

Außerdem ist in den Fig. 4a bis 4c der einstellbare, mögliche Winkelbereich gut erkennbar, der in einer Modulneigung von vorzugsweise ungefähr 11° bis 30° liegt (bezogen auf die Relativlage der Montageebene 106 in den Fig. 4a und 4c).

Die Fig. 5a und 5b zeigen Querschnitte eines vollständigen, vorderen Gelenkständers 18. In der Fig. 5a ist das Halteprofil 26 in einer ersten Orientierung auf dem vorderen Tragprofil 24 montiert. In der Fig. 5b ist das gleiche Halteprofil 26 in einer zweiten Orientierung auf dem vorderen Tragprofil 24 montiert. Das Halteprofil 26 wurde in der Orientierung der Fig. 5b um 180° gedreht, d.h. spiegelbildlich angeordnet, so dass der erste Schenkel 38 des weiblichen Verbindungselements 32 von links (Fig. 5a) nach rechts (Fig. 5b) gewechselt hat. Durch das Wechseln der Orientierung des weiblichen Verbindungselements 32 sind somit zwei verschiedene Winkelbereiche für die Orientierung der Montageebene 106 möglich. Der mit der Anordnung gemäß Fig. 5b effektiv erzielbare Neigungswinkel für das PV-Modul 16 liegt z.B. zwischen 0° und 15°. In Summe ergibt sich in einer Zusammenschau mit dem Winkelbereich der Fig. 5a (11° bis 30°) ein Gesamtwinkelbereich von 0° bis 30°, wobei es einen überlappenden Winkelbereich zwischen den Anordnungen der Fig. 5a und 5b gibt. In Abhängigkeit von der Geometrie der Verbindungselemente 32 und 34 lassen sich sogar Winkelbereiche von bis zu 50° erzielen.

Das Halteprofil 26 hat also die besonderen Vorteile, dass es in zwei verschiedenen Stellungen (d.h. siegelbildlich) auf die Tragprofile 24 und 28 gesteckt werden kann, um zwei unterschiedliche Winkelbereiche abzudecken. Des Weiteren ist das vordere Halteprofil 26 vorzugsweise identisch zum hinteren Halteprofil 30 ausgebildet, so dass nur ein einziges Tragprofil 26 bzw. 30 im Baukastensystem erforderlich ist. Das Baukastensystem kann um (nicht dargestellte) Unterlegprofile, die vorzugsweise einen rechteckigen Querschnitt aufweisen, ergänzt werden, um die Höhen h1 und h2 zu variieren, so fern es gewünscht ist.

Das Halteprofil 26 weist neben dem weiblichen Verbindungsteil 32 ein oder mehrere Stützschenkel 60 auf, die über ein oder mehrere Querstreben 108 zwecks Stabilisierung miteinander verbunden sein können und die in flächig ausgebildeten Auflageköpfen 110 enden können. Die Auflageköpfe 110 weisen eine ebene Oberseite 112 auf, die in der tatsächlichen Montageebene 106 liegt.

Das Tragprofil 24 kann neben den sich im Wesentlichen horizontal erstreckenden Schenkeln 64 und 66 eine vorzugsweise ebene Basis 114 aufweisen, die entweder direkt oder indirekt am Dach 12 befestigt werden kann. Seitliche, flügelähnliche Abschnitte der Basis 114 können vertikale, durchgehende Öffnungen zum Durchgriff von z.B. (nicht dargestellten) Schrauben aufweisen.

Des Weiteren kann insbesondere der hintere Gelenkständer 20 in der Längsrichtung L durchgehend flächig ausgebildet sein. Dadurch verringert sich die effektive Windangriffsfläche (vgl. Bezugszeichen 31 in Fig. 1), wenn der Wind aus der x-Richtung bläst (vgl. Fig. 1). Neben der flächigen (brettartigen) Ausbildung der Gelenkständer 18 und 20, die dann in der Längsrichtung L durchgehend ausgebildet sind, können auch pfostenähnliche Tragprofile 24 und 28 vorgesehen werden, die man anschließend mit von außen aufsteckbaren Verkleidungen versieht, um den gleichen Effekt wie bei einem in der Längsrichtung L flächig durchgehenden Gelenkständer 18 oder 20 zu erhalten.

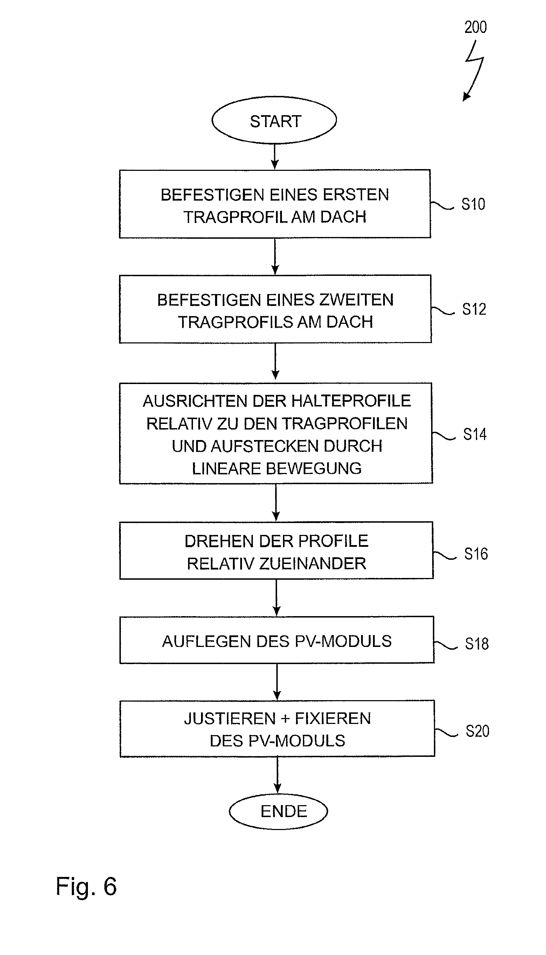

Unter Bezugnahme auf Fig. 6 ist ein Flussdiagramm eines Verfahrens 200 zur Montage des Aufständerungssystems 10 auf einem Dach 12 gezeigt.

In einem ersten Schritt S10 wird ein erstes Tragprofil 24 oder 28 am Dach 12 befestigt.

In einem zweiten Schritt S12 wird ein zweites Tragprofil 28 oder 24 am Dach 12 befestigt, und zwar in einem frei wählbaren Abstand A, der wiederum dem Neigungswinkel α entspricht. Die Längsrichtung L der Tragprofile 24 und 28 sind möglichst parallel zueinander zu orientieren. Der senkrecht dazu verlaufende Abstand A kann mit einem Zollstock gemessen werden. Zur Verifizierung können die Diagonalen zwischen den äußeren Enden der Tragprofile 24 und 28 bestimmt und anschließend verglichen werden. Die Diagonalen müssen gleich groß sein.

In einem nächsten Schritt S14 werden die Halteprofile 26 und 30 relativ zu den Tragprofilen 24 und 28 ausgerichtet, um in die Verbindungsstellung zu gelangen, wie sie exemplarisch in der Fig. 3a gezeigt ist. Dann können die Profile 24 bis 30 mittels einer linearen Bewegung (vgl. Pfeil 90 in Fig. 3a) ineinandergesteckt werden.

In einem Schritt S16 werden die Halteprofile 26 und 30 um ihre jeweilige Längsachse 54 in eine beliebige Arretierstellung (vgl. Fig. 4a bis 4c) gedreht. Dabei ist es nicht erforderlich, dass die Profile schon exakt in die Winkelstellung gedreht werden, die das PV-Modul 16 später einnehmen soll. Es reicht vollkommen aus, wenn die Halteprofile 26 und 30 in eine beliebige Arretierstellung gebracht werden.

In einem Schritt S18 wird das PV-Modul 16 auf die Halteprofile 26 und 30 aufgelegt. Eine Unterseite des PV-Moduls 16 kommt mit den Oberseiten 112 der Halteprofile 26 und 30 in Anlage. Die Halteprofile 26 und 30 richten sich durch das Gewicht des PV-Moduls 16 üblicherweise von alleine entlang dessen Unterseite aus, wobei sich als Ergebnis der gewünschte Neigungswinkel α selbstständig einstellt.

In einem Schritt S20 wird das PV-Modul 16 relativ zu den Halteprofilen 26 und 30 hinsichtlich seiner Lage justiert und anschließend beispielsweise mit den Halteklemmen 22 fixiert.

Bei der oben stehenden Beschreibung der Figuren wurde ein rechtwinkliges Koordinatensystem als Referenz gewählt. Eine Längsrichtung L des Dachs 12 ist mit Z bezeichnet worden. Die (vertikale) Höhe wurde mit Y bezeichnet. Dies gilt analog für das System 10.

Des Weiteren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

## Patentansprüche

1. Gelenkständer (18, 20) zur schrägen Montage eines PV-Moduls (16) auf einem Dach (12), vorzugsweise einem Flachdach (14), mit:
- einem sich im Wesentlichen in einer Längsrichtung (L) erstreckenden Halteprofil (26, 30) zur Befestigung des PV-Moduls (16), und
- einem sich im Wesentlichen in der Längsrichtung (L) erstreckenden Tragprofil (24, 28) zur Kopplung des Halteprofils (26, 30) an das Dach (12),
wobei das Halteprofil (26, 30) und das Tragprofil (24, 28) entlang einer Verbindungsachse (104), die parallel zur Längsrichtung (L) orientiert ist, lösbar miteinander verbindbar sind, wobei der Gelenkständer (18, 20)
- ein männliches Verbindungselement (34) sowie
- ein weibliches Verbindungselement (32) mit einem Körper (36) aufweist, der zwei sich gegenüberliegende Schenkel (38, 40) umfasst, die einen sich parallel zur Längsrichtung (L) erstreckenden Verbindungsraum (50) umschließen und eine derartige Öffnung (42) zwischen sich definieren, dass das männliche Verbindungselement (34) in einer, vorzugsweise einzigen, Verbindungsstellung entlang einer senkrecht zur Längsrichtung (L) orientierten Querrichtung (92) in den Verbindungsraum (50) einführbar ist und anschließend um die Verbindungsachse (104) in eine Arretierstellung schwenkbar ist, in welcher die Verbindungselemente (32, 34) derart formschlüssig zusammengehalten werden, dass sie nicht mehr senkrecht zur Verbindungsachse (104) trennbar sind.

2. Gelenkständer nach Anspruch 1, wobei das weibliche Verbindungselement (32) an einem der Profile (24, 28; 26, 30) vorgesehen ist und das männliche Verbindungselement (34) am anderen Profil (26, 30; 24, 28) vorgesehen ist.

3. Gelenkständer nach einem der Ansprüche 1 oder 2, wobei der Verbindungsraum (50) ein zylindrischer Hohlraum (48) im Körper (36) des weiblichen Verbindungselementes (32) ist, wobei sich der Hohlraum (48) entlang einer Zylinderachse (54) erstreckt, die in der Arretierstellung koaxial zur Verbindungsachse (104) liegt.

4. Gelenkständer nach einem der Ansprüche 1 bis 3, wobei das männliche Verbindungselement (34) einen im Querschnitt kreisbogenförmigen ersten Abschnitt (76) und einen kreisbogenförmigen zweiten Abschnitt (82) aufweist, die sich vorzugsweise nahezu diametral gegenüberliegen, wobei die kreisbogenförmigen Abschnitte (76, 82) im Querschnitt mit einer Innenwand (52) des Hohlraums (48) auf einem imaginären Kreis (68) liegen.

5. Gelenkständer nach einem der Ansprüche 1 bis 4, wobei die Schenkel (38, 40) einen Winkel einschließen, der größer als 180° ist.

6. Gelenkständer nach einem der Ansprüche 1 bis 5, wobei die Öffnung (42) als ein in der Längsrichtung (L) verlaufender Schlitz, vorzugsweise mit konstanter Breite, im Körper (36) ausgebildet ist.

7. Gelenkständer nach einem der Ansprüche 1 bis 6, wobei ein linearer Abschnitt (68) des männlichen Verbindungselementes (34) im Querschnitt parallel zur Querrichtung (92) in der Verbindungsstellung orientiert ist, entlang der die Verbindungselemente (32, 34) mittels einer linearen Bewegung (90) verbunden werden.

8. Gelenkständer nach einem der Ansprüche 1 bis 7, wobei das Halteprofil (26, 30) so ausgebildet ist, dass es bei einer Drehung um 180° um die Querrichtung (94) ebenfalls mit dem Tragprofil (24, 28) verbindbar ist.

9. Gelenkständer nach einem der Ansprüche 1 bis 8, wobei wenigstens ein Profil (24 - 30) in der Längsrichtung (L) flächig ausgebildet ist.

10. Verfahren (200) zur schrägen Montage eines PV-Moduls (16) auf einem Dach (12) unter Verwendung mindestens zwei Gelenkständern (18, 20) nach einem der Ansprüche 1 bis 7, die unterschiedliche Höhen (h1, h2) aufweisen, umfassend die Schritte:
- Befestigen (S10) eines ersten Tragprofils (24; 28) am Dach (12);
- Befestigen (S12) eines zweiten Tragprofils (28; 24) am Dach (12) in einem auswählbaren Abstand (A) relativ zum ersten Tragprofil (24; 28);
- Ausrichten (S14) der Halteprofile (26, 30) relativ zu den Tragprofilen (24, 28), so dass sich die Profile (24 - 30) in der Verbindungsstellung befinden;
- lineares Bewegen (90; S14) der Halteprofile (26, 30) relativ zu den Tragprofilen (24, 28) entlang der Querrichtung (92) in der Verbindungsstellung;
- Drehen (S16) der Halteprofile (26, 30) um ihre jeweilige Längsachse (54; 104) in eine beliebige Arretierstellung;
- Auflegen (S18) des PV-Moduls (16) auf die Halteprofile (26, 30); und
- Fixieren des PV-Moduls (16) an den Halteprofilen (26, 30).

11. Verfahren nach Anspruch 10, wobei ein Neigungswinkel (α), der von dem PV-Modul (16) und dem Dach (12) eingeschlossen wird, allein durch die Auswahl des Abstandes (A) zwischen den Gelenkständern (18, 20) festgelegt wird, wobei die Gelenkständer (18, 20) konstante, unterschiedliche Höhen (h1, h2) aufweisen.

12. System (10) zur schrägen Montage eines PV-Moduls (16) auf einem Dach (12) umfassend einen vorderen, mindestens zweiteiligen Gelenkständer (18) nach mindestens einem der Ansprüche 1 bis 8 und einen hinteren, mindestens zweiteiligen Gelenkständer (20) nach mindestens einem der Ansprüche 1 bis 8.

13. System nach Anspruch 12, wobei die Gelenkständer (16, 28) genau zwei unterschiedliche Höhen (h1, h2) aufweisen.
